# EUROPEAN PATENT SPECIFICATION

(11) **EP 4 212 028 B1**
(45) Date of publication and mention of the grant of the patent: **13.11.2024**
(21) Application number: 22151964.8
(22) Date of filing: 18.01.2022
(51) Int. Cl.: A24F 40/10, A24F 40/40, A24F 40/70, C04B 35/565, C04B 35/58, C04B 35/00, A24F 40/465, C04B 35/626

(54) **AEROSOL GENERATING ARTICLE WITH AN IMPROVED ENVIRONMENTAL IMPACT AND ASSOCIATED ASSEMBLY**
AEROSOLERZEUGENDER ARTIKEL MIT VERBESSERTER UMWELTVERTRÄGLICHKEIT UND ZUGEHÖRIGE ANORDNUNG
ARTICLE DE GÉNÉRATION D'AÉROSOL AVEC UN MEILLEUR IMPACT ENVIRONNEMENTAL ET ENSEMBLE CORRESPONDANT

(43) Date of publication of application: 19.07.2023
(73) Proprietor: JT International SA, 1202 Genève (CH)
(72) Inventor: WRIGHT, Alec, GUILDFORD SURREY, GU2 7SU (GB)
(74) Representative: Lavoix

(56) References cited:
- WO-A1-2020/245338
- JP-A- S 599 680
- US-A1- 2018 242 643
- US-A1- 2019 246 696
- DATABASE WPI Week 198409, Derwent World Patents Index; AN 1984-051790

## Description

### FIELD OF THE INVENTION

The present invention concerns an aerosol generating assembly comprising an aerosol generating article with an improved environmental impact and an aerosol generating device able to cooperate with this article.

### BACKGROUND OF THE INVENTION

Different types of aerosol generating assemblies are already known in the art. Generally, such assemblies comprise a storage portion for storing an aerosol forming precursor, which can comprise for example a liquid or a solid. A heating system is formed of one or more electrically activated resistive heating elements arranged to heat said precursor to generate the aerosol. The aerosol is released into a flow path extending between an inlet and outlet of the device. The outlet may be arranged as a mouthpiece, through which a user inhales for delivery of the aerosol.

In some aerosol generating assemblies, the precursor is stored in a removable article, also called cartridge or "pod". The aerosol generating assembly comprises then an aerosol generating device comprising an outside casing which defines a cavity in which the article may be inserted. When the article is assembled into the aerosol generating device, the article is said to be in an operation position and the device is able to generate the aerosol. When the precursor is consumed, the article may be easily removed and replaced.

These consumable articles are usually made of plastic and metallic components. They presents therefore a negative environmental impact.

US 2019/246696 A1 discloses a consumable unit comprising a fluid reservoir configured to operate with a cigarette product. US 2018/242643 A1 and WO 2020/245338 A1 also disclose aerosol-generating devices. JP S59 9680 A discloses a method for manufacturing a body of semi-conductor ceramics.

### SUMMARY OF THE INVENTION

One of the aims of the present invention is therefore to provide an aerosol generating article operating with a device to generate aerosol with a reduced environmental impact while presenting an equivalent heating efficiency.

For this purpose, the invention relates to an aerosol generating assembly according to claim 1.

Indeed, using these features, the article is made from ceramic loaded with liquid aerosol forming precursor. By heating the article, aerosol is generated and is released from the semi-conductor ceramic. The aerosol flows then towards the mouthpiece and the user. Such an article presents a limited environmental impact as only the ceramic is consumable contrary to a conventional article made of plastic and metallic materials.

Ceramics have a relatively high thermal mass compared to that of metals. Therefore, it takes a large amount of energy to change the temperature due to the thermal inertia. To overcome this, the ceramic is doped with the electrically conductive agent, which may have a lower thermal mass and is also conductive. The article is then formed of homogenous material whereby the entire reservoir body has the same electrical conductive properties. In other words, the electrical conductivity remains substantially constant from the inside to the external surface of the body. Thanks to the doping, less energy is needed to reach the aimed temperature enabling the generation of the aerosol. Moreover, since the body is evenly conductive, the orientation of the article in the device to ensure electrical connection to the device becomes less important and the freedom of shaping the article is increased. Also using resistive heating keeps the device cost lower allowing a more straightforward design.

According to some embodiments, the semi-conductor ceramic is selected amongst Silicone carbide (SiC) or Molybdenum disilicide (MoSi2).

According to some embodiments, the electrically conductive agent is a doping agent selected amongst Yttrium oxide (Y203), Scandium oxide (Sc2O3), Silicium (Si), Ti2CN and combinations thereof.

According to some embodiments, the ratio between the electrically conductive agent and the ceramic in the reservoir body is comprised between 5% and 15% w/w doping agent.

According to some embodiments, the reservoir body is homogenous.

Thanks to these features, the reservoir body presents less electrical resistivity to heat and generate aerosol with limited electrical energy required.

According to some embodiments, the reservoir body forms at least an air through-low channel.

Thanks to these features, the generated aerosol is released from the ceramic and flows through the article towards the mouthpiece.

According to some embodiments, the reservoir body is cuboid.

According to some embodiments, the reservoir body is hexagonal.

Thanks to these features, the reservoir body presents edges and therefore presents a finite number of ways of placing the article in the corresponding heating chamber to ensure the contact between the reservoir body and the energy connection system.

According to some embodiments, the reservoir body is cylindrical.

Thanks to these features, the article may be more easily inserted in the corresponding heating chamber.

According to some embodiments, the energy connection system is formed by two electrodes arranged in the heating chamber so as to be in contact with the reservoir body on two opposite sides of the reservoir body.

According to some embodiments, said two opposite sides of the reservoir body extend along the article axis or perpendicularly to the article axis.

Thanks to these features, the electrodes make contact with the reservoir body and provide the electrical energy to heat the article and to generate aerosol.

According to some embodiments, the energy connection system is formed by an induction coil.

Thanks to these features, the energy connection system creates an electromagnetic field enabling the electrically conductive agent to generate electrical current when powered by the device and to heat the aerosol forming precursor contained in the reservoir body to produce aerosol.

According to some embodiments, the energy connection system is arranged so as to contact or face the reservoir body on an entire side of the reservoir body.

Thanks to these features, the contact area between the reservoir body and the energy connection system is increased and thus more heat may be provided to the article.

According to some embodiments, the assembly comprising a mouthpiece, the airflow channel being able to guide the generated aerosol released from the semi-conductor ceramic towards the mouthpiece.

According to some embodiments, the reservoir body defines with the heating chamber a gap forming a secondary airflow path, the secondary airflow path being able to guide the generated aerosol released from the semi-conductor ceramic towards the mouthpiece.

Thanks to these features, the secondary airflow path guides the generated aerosol released from the semi-conductor ceramic towards the mouthpiece. When the reservoir body is heated through the energy connection system, the generated aerosol may flow through both the airflow channel and through the gap.

In the context of the present invention, as defined in claim 1 (assembly), there is also disclosed an aerosol generating article extending along an article axis and configured to operate with an aerosol generating device; the article comprising a reservoir body being formed of a block of semi-conductor ceramic, in particular Silicone carbide (SiC) ; the semi-conductor ceramic being porous and able to retain a liquid aerosol forming precursor and to release the produced aerosol; the reservoir body being configured to conduct or generate electrical current when powered by the device and to heat the aerosol forming precursor contained in the reservoir body to produce aerosol.

### BRIEF DESCRIPTION OF THE DRAWINGS

The invention and its advantages will be better understood upon reading the following description, which is given solely by way of non-limiting examples and which is made with reference to the appended drawings, in which:
- Figure 1 is a cross sectional view of an aerosol generating assembly according to the invention, in an open configuration, according to a first embodiment and comprising an aerosol generating device cooperating with an aerosol generating article;
- Figure 2 is a cross sectional view of the aerosol generating assembly of Figure 1, in a closed configuration;
- Figure 3 is a perspective view of the aerosol generating article of Figure 1;
- Figure 4 is a cross sectional view of an aerosol generating assembly according to the invention, in an open configuration, according to a second embodiment, and
- Figure 5 is a cross sectional view of the aerosol generating assembly of Figure 4, in a closed configuration.

### DETAILED DESCRIPTION OF THE INVENTION

Before describing the invention, it is to be understood that it is not limited to the details of construction set forth in the following description. It will be apparent to those skilled in the art having the benefit of the present disclosure that the invention is capable of other embodiments and of being practiced or being carried out in various ways.

As used herein, the term **"aerosol generating device"** or **"device"** may include a vaping device to deliver an aerosol to a user, including an aerosol for vaping, by means of a heater element explained in further detail below. The device may be portable. "Portable" may refer to the device being for use when held by a user. The device may be adapted to generate a variable amount of aerosol, e.g. by activating the heater element for a variable amount of time (as opposed to a metered dose of aerosol), which can be controlled by a trigger. The trigger may be user activated, such as a vaping button and/or inhalation sensor. The inhalation sensor may be sensitive to the strength of inhalation as well as the duration of inhalation to enable a variable amount of vapour to be provided (so as to mimic the effect of smoking a conventional combustible smoking article such as a cigarette, cigar or pipe, etc.). The device may include a temperature regulation control to drive the temperature of the heater and/or the heated aerosol generating substance (aerosol pre-cursor) to a specified target temperature and thereafter to maintain the temperature at the target temperature that enables efficient generation of aerosol.

As used herein, the term **"aerosol"** may include a suspension of vaporizable material as one or more of: solid particles; liquid droplets; gas. Said suspension may be in a gas including air. Aerosol herein may generally refer to/include a vapour. Aerosol may include one or more components of the vaporizable material.

As used herein, the term **"vaporizable material"** or **"precursor"** may refer to a smokable material which may for example comprise nicotine or tobacco and an aerosol former. Tobacco may take the form of various materials such as shredded tobacco, granulated tobacco, tobacco leaf and/or reconstituted tobacco. Suitable aerosol formers include: a polyol such as sorbitol, glycerol, and glycols like propylene glycol or triethylene glycol; a non-polyol such as monohydric alcohols, acids such as lactic acid, glycerol derivatives, esters such as triacetin, triethylene glycol diacetate, triethyl citrate, glycerin or vegetable glycerin. In some embodiments, the aerosol generating agent may be glycerol, propylene glycol, or a mixture of glycerol and propylene glycol. The substrate may also comprise at least one of a gelling agent, a binding agent, a stabilizing agent, and a humectant.

### DESCRIPTION OF A FIRST EMBODIMENT OF THE INVENTION

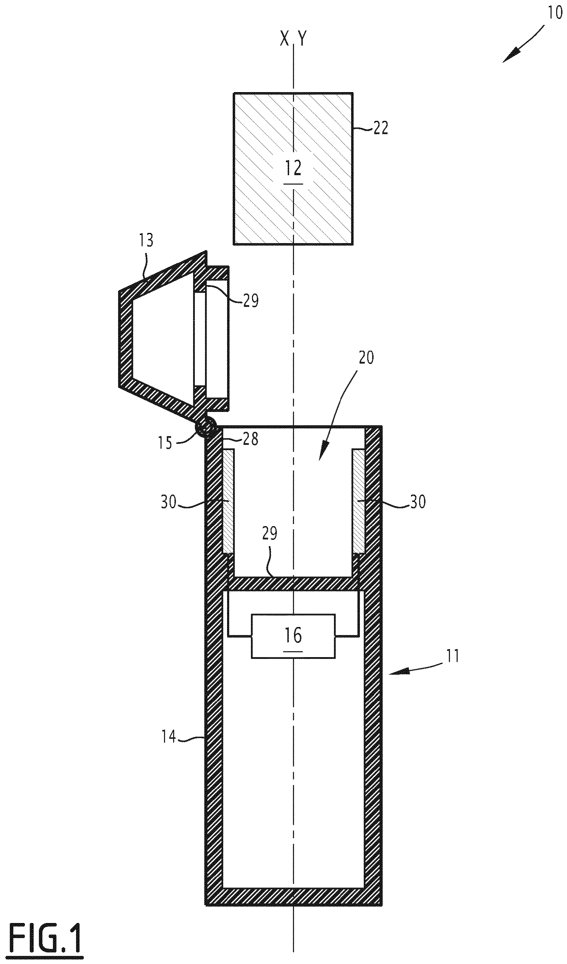

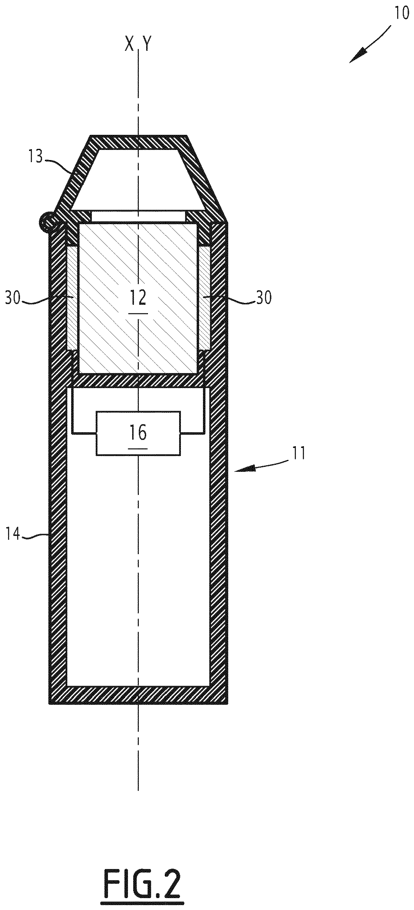

Figures 1 and 2 show an aerosol generating assembly 10 comprising an aerosol generating device 11, called hereinafter device 11, and an aerosol generating article 12, called hereinafter article 12. The device 11 and the article 12 are shown in Figure 1 away from each other. In Figure 2, the device 11 is operating with the article 12 to generate aerosol.

The device 11 comprises a device body extending along a device axis Y. The device body comprises a mouthpiece 13 and a housing 14 arranged successively along the device axis Y. According to the example of Figure 1, the mouthpiece 13 and the housing 14 are cooperating together through a pivot connection 15. Particularly, the mouthpiece 13 is here designed to switch from an open configuration, shown in Figure 1, to a closed configuration in which the mouthpiece 13 is fixed on or received in an insertion opening formed at one of the ends of the housing 14, as shown in Figure 2. In this case, the article 12 may be inserted inside the device 11 when the mouthpiece 13 is in the open configuration. According to another example (not-shown), the mouthpiece 13 and the housing 14 form two different pieces. According to another example (not-shown), the mouthpiece 13 and the housing 14 form one unique piece.

The mouthpiece 13 delimits a flow outlet (not-shown) through which the generated aerosol flows towards the user when puffing.

The housing 14 delimits an internal space of the device 11 receiving various elements designed to carry out different functionalities of the device 11. This internal space can for example receive a power supply 16, as a battery, for powering the device 11, a control module for controlling the operation of the device 11, a heating chamber 20 for heating the article 12, etc. Among these elements, only the heating chamber 20 will be explained in further detail below.

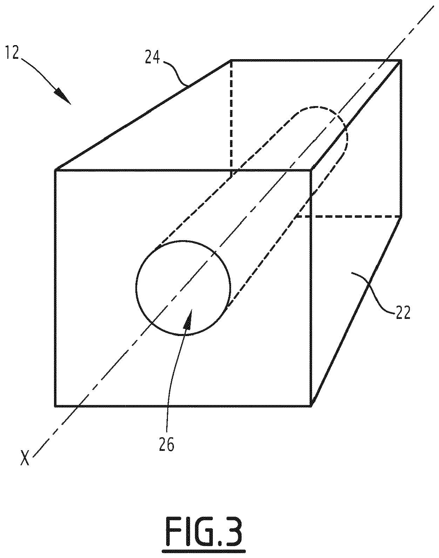

The article 12 is configured to conduct or generate electrical current when the article 12 is inserted in the heating chamber 20 in order to produce aerosol, as it will be explained below. In reference to Figure 3, the article 12 extends along an article axis X. The article 12 comprises a reservoir body 22. As shown in Figure 3, the reservoir body 22 is here cuboid. The reservoir body 22 presents then four edges 24 and four identical side surfaces which provide a finite number of ways of placing the article 12 in the heating chamber 20 and therefore ensure a good contact as it will be explained below. In a variant (not shown), the reservoir body 22 is hexagonal. The reservoir body 22 presents then six edges 24 and six identical surfaces.

At least an air through-flow channel 26 is arranged in the reservoir body 22. The air through-flow channel 26 extends along the article axis X. The air through-flow channel 26 extends between the two opposite faces of the reservoir body 22 along the article axis X. The air through-flow channel 26 presents here a cylindrical shape but may present another shape, as a parallelepiped shape for example. As it will be explained below, the air through-flow channel 26 is able to guide the generated aerosol released from the reservoir body 22 towards the mouthpiece 13.

The reservoir body 22 is formed of a block of semi-conductor ceramic doped with at least an electrically conductive agent. The ceramic is in particular a technical ceramic, which is an inorganic, non-metallic material and which is at least partially crystalline. The ceramic is a semi-conductor meaning that it is a solid material presenting a conductivity between that of an insulator and that of most metals. Its resistivity falls as its temperature rises. Its conducting properties may be altered by introducing impurities, also called "doping", into the crystal structure. In particular, the ceramic is here coupled with other materials which have a lower thermal mass and are also conductive. In other words, the semi-conductor ceramics are already conductive, although very week, and the addition of the doping agent increases the conductivity of the reservoir body 22. Therefore, the reservoir body 22 is here conductive thanks to the doping with the electrically conductive agent. The semi-conductor ceramic is selected amongst silicone carbide (SiC) or molybdenum disilicide (MoSi2). The electrically conductive agent is configured to conduct or generate electrical current and to heat the aerosol forming precursor present in the semi-conductor ceramic to produce the aerosol. The electrically conductive agent is a doping agent selected amongst Yttrium oxide (Y2O3), Scandium oxide (Sc2O3), Silicium (Si) or Ti2CN. The density ratio of between the electrically conductive agent and the ceramic in the reservoir body 22 is comprised between 5% and 5% w/w. When the semi-conductor ceramic is made of silicon carbide, which presents better conductive proprieties than other ceramics, there is no need of a great amount of electrically conductive agent to obtain a global electrical conductivity enough to enable the generating of aerosol as explained below.

Advantageously, the doping of the ceramic leads to substantially homogenous conductive properties. In other words, the reservoir body 22 presents advantageously substantially the same electrical resistivity properties at each point.

The semi-conductor ceramic is porous. The semi-conductor ceramic is able to retain a liquid aerosol forming precursor as defined above. In other words, the semi-conductor ceramic is loaded with the liquid aerosol forming precursor which remains captive essentially by capillarity effect in the pores of the ceramic. The semi-conductor is further able to release the produced aerosol when the article 12 is heated by the device 11. In particular, when the liquid aerosol forming precursor is transformed in an aerosol vapour, the vapour is no more captive of the pores and flows out of the reservoir body 22 and notably flows in the air through-flow channel 26, towards the mouthpiece 13.

Referring again to Figure 2, the heating chamber 20 forms a cup shape adapted to receive the article 12. The heating chamber 20 forms here a cuboid shape extending along the device axis Y, complementary of the shape of the article 12. The heating chamber 20 is configured to receive the article 12 so that the device axis Y and the article axis X are parallel or aligned. The heating chamber 20 then comprises four lateral faces 28 extending along the device axis Y and two transversal faces 29 extending perpendicular to the device axis Y.

The device 11 further comprises an energy connection system 30 arranged in the heating chamber 20. The power supply 16 is configured to power the energy connection system 30 to produce aerosol in the article 12. Referring to Figures 1 and 2, the energy connection system 30 is here formed by two electrodes arranged in the heating chamber 20 so as contact the reservoir body 22 on two opposite sides of the reservoir body 22 transversally to the article axis X. In particular, the two electrodes are arranged on two opposite lateral faces 28 of the heating chamber 20. In this example, the power supply 16 is configured to provide an electrical current to the electrically conductive agent through the electrodes. The electrically conductive agent is then configured to conduct this electrical current and to heat the aerosol forming precursor contained in the reservoir body 22 to produce aerosol.

In an advantageous embodiment, not shown, the energy connection system 30 is arranged so as to contact the reservoir body 22 on the entire height of the reservoir body 22 along the article axis X, in order to increase the contact between the reservoir body 22 and the energy connection system 30 and thus provide more heat to the article 12. In this case, each electrode extends along the entire height of the associated lateral face 28 along the device axis Y.

### OPERATION OF THE INVENTION

The operation of the aerosol generating assembly 10 will now be described. Initially, it is considered that the article 12 is extracted from the device 11, as shown on Figure 1. In order to insert it, the user first opens the heating chamber 20 by pivoting the mouthpiece 13 around the pivot connection 15.

Then, the user inserts the article 12 into the heating chamber 20 and the user closes the heating chamber by fixing the mouthpiece 13 on the housing 14, as shown on Figure 2.

The reservoir body 22 of the article 12 is then in contact with the energy connection system 30 of the device 11.

Then, the user may activate the operation of the aerosol generating assembly 10 by actuating for example an ON button or by performing a puff.

This initiates the providing of electrical current from the power supply 16 to the energy connection system 30. The reservoir body 22, and in particular, the electrically conductive agent receives the electrical current. Consequently, the reservoir body 22 is heating until reaching a sufficiently high temperature to aerosolize aerosol forming precursor present in the semi-conductor ceramic and to produce the aerosol.

The produced aerosol is released from the semi-conductor ceramic and flows in the air through-flow channel 26, arranged between the two opposite transversal faces 29, towards the mouthpiece 13.

Finally, the aerosol is sucked through the mouthpiece 13 and inhaled by the user.

### MANUFACTURING OF THE ARTICLE

The manufacturing of the article 12 will now be described.

First, the semi-conductor ceramic is provided as a powder.

The electrically conductive agent is also provided as a powder.

The powders of ceramic and doping agents are milled in the solvent to help with the mixing. The solvent is in particular ethanol.

Then, the mixture is dried and sieved.

The mixture is then sintered in order to compact it and to form a solid mass of material by heat and/or pressure. The reservoir body 22 is thus formed.

Finally, liquid aerosol forming precursor is added in the porous reservoir body 22.

### DESCRIPTION OF A SECOND EMBODIMENT OF THE INVENTION

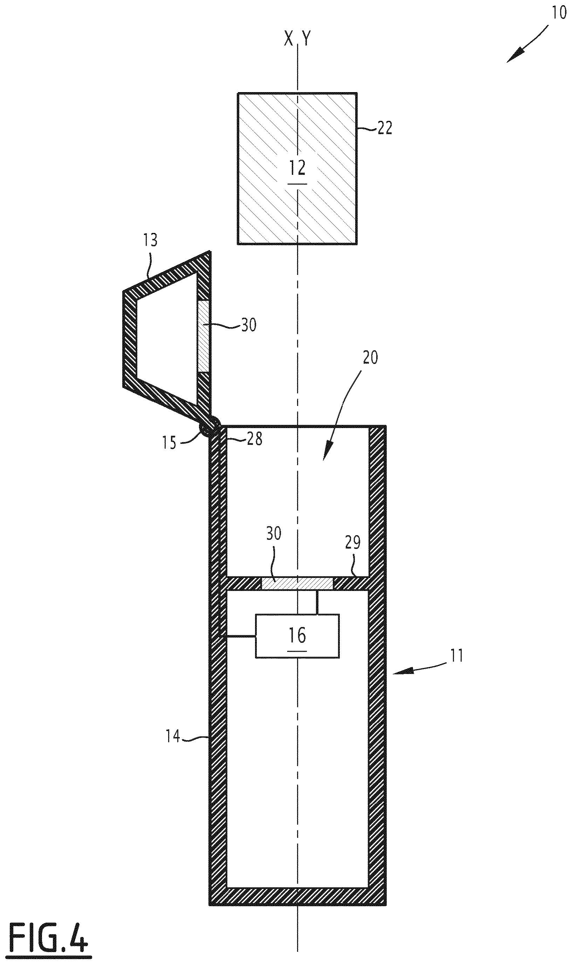

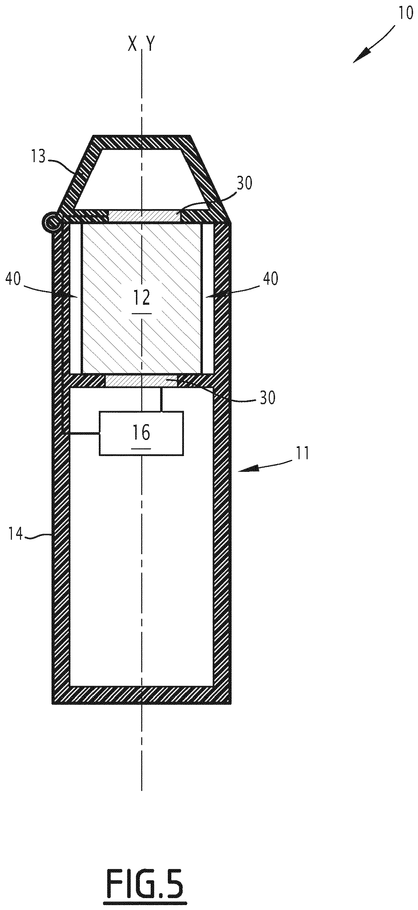

Figures 4 and 5 show an aerosol generating assembly 10 according to a second embodiment of the invention.

The aerosol generating assembly 10 according to the second embodiment is similar to the aerosol generating assembly 10 according to the first embodiment explained above except the features described below.

As visible on Figures 4 and 5, the energy connection system 30 is here formed by two electrodes arranged in the heating chamber 20 so as contact the reservoir body 22 on two opposite ends of the reservoir body 22 along the article axis X. In particular, the two electrical electrodes are arranged on the two opposite transversal faces 29 of the heating chamber 20.

In an advantageous embodiment, not shown, the energy connection system 30 is arranged so as to contact the reservoir body 22 on the entire width of the reservoir body 22 perpendicularly to the article axis X.

In this embodiment, the way of placing the article 12 in the heating chamber 20 has no influence on the contact between the reservoir body 22 and the electrical electrodes. The reservoir body 22 may be therefore cuboid, hexagonal or cylindrical. Thus, the reservoir body can be oriented in different manners such as by rotating it by 180 degrees around a median axis perpendicular to chamber's axis Y or it can be rotated incrementally about axis Y.

Advantageously, the reservoir body 22 defines with the heating chamber 20 a gap 40 forming a secondary airflow path. In particular, the reservoir body 22 presents a transversal section smaller than the transversal section of the heating chamber 20. Therefore, the gap 40 is formed between the external surface of the reservoir body 22 and the inner surface of the heating chamber 20. The secondary airflow path is able to guide the generated aerosol released from the semi-conductor ceramic towards the mouthpiece 13.

In this embodiment, when the reservoir body 22 is heated through the energy connection system 30, the generated aerosol flows through both the air through-flow channel 26 and through the gap 40.

### DESCRIPTION OF OTHER EMBODIMENTS OF THE INVENTION

Other embodiments of the energy connection system 30 are possible.

In particular, the energy connection system 30 may be formed by four electrodes arranged on each of the lateral faces 28 of the heating chamber 20.

In a variant, the energy connection system 30 may be formed by six electrodes arranged on each of the faces 28, 29 of the heating chamber 20.

In another variant, the energy connection system 30 may formed by an induction coil arranged inside the heating chamber 20. The power supply 16 is configured to power the inductive coil which generates then an electromagnetic field. The electrically conductive agent is then configured to generate electrical current when powered by the inductive coil and to heat the aerosol forming precursor contained in the reservoir body 22 to produce aerosol.

It will be apparent to those skilled in the art that other embodiments may be carried out in various ways by combining the previous embodiments.

## Claims

1. An aerosol generating assembly (10) comprising:
- an aerosol generating article (12) extending along an article axis (X) and configured to operate with an aerosol generating device (11);
the article (12) consisting of a reservoir body (22) formed of a block of semi-conductor ceramic doped with at least an electrically conductive agent;
the semi-conductor ceramic being porous and able to retain a liquid aerosol forming precursor and to release the produced aerosol;
the electrically conductive agent being configured to conduct or generate electrical current when powered by the device (11) and to heat the aerosol forming precursor contained in the reservoir body (22) to produce aerosol; and
- an aerosol generating device (11), the device (11) comprising a heating chamber (20) able to receive the article (12), the device (11) further comprising a power supply (16) and an energy connection system (30) arranged in the heating chamber (20), the power supply (16) being configured to power the energy connection system (30) to produce aerosol by the article (12).

2. The aerosol generating assembly (10) according to claim 1, in which the semi-conductor ceramic is selected amongst Silicone carbide (SiC) or Molybdenum disilicide (MoSi2).

3. The aerosol generating assembly (10) according to claim 1 or 2, in which the electrically conductive agent is a doping agent selected amongst Yttrium oxide (Y2O3), Scandium oxide (Sc2O3), Silicium (Si), Ti2CN and combinations thereof.

4. The aerosol generating assembly (10) according to claim 3, in which the ratio between the electrically conductive agent and the ceramic in the reservoir body (22) is comprised between 5 % and 15% w/w.

5. The aerosol generating assembly (10) according to any one of the preceding claims, in which the reservoir body (22) forms at least an air through-flow channel (26).

6. The aerosol generating assembly (10) according to any one of claims 1 to 5, in which the reservoir body (22) is cuboid or hexagonal.

7. The aerosol generating assembly (10) according to any one of claims 1 to 5, in which the reservoir body is the reservoir body (22) is cylindrical.

8. The aerosol generating assembly (10) according to any one of claims 1 to 7, wherein the energy connection system (30) is formed by two electrodes arranged in the heating chamber (20) so as to be in contact the reservoir body (22) on two opposite sides of the reservoir body (22).

9. The aerosol generating assembly (10) according to any one of claims 1 to 8, wherein said two opposite sides of the reservoir body (22) extend along the article axis (X) or perpendicularly to the article axis (X).

10. The aerosol generating assembly (10) according to any one of claims 1 to 7, wherein the energy connection system (30) is formed by an induction coil.

11. The aerosol generating assembly (10) according to any of claims 1 to 10, wherein the energy connection system (30) is arranged so as to contact or face the reservoir body (22) on an entire side of the reservoir body (22).

12. The aerosol generating assembly (10) according to any of claims 1 to 11, wherein the article (12) is according to claim 6, the assembly (10) comprising a mouthpiece (13), the air through-flow channel (26) being able to guide the generated aerosol released from the semi-conductor ceramic towards the mouthpiece (13).

13. The aerosol generating assembly (10) according to claim 12, wherein the reservoir body (22) defines with the heating chamber (20) a gap (40) forming a secondary airflow path, the secondary airflow path being able to guide the generated aerosol released from the semi-conductor ceramic towards the mouthpiece (13).

## Patentansprüche

1. Aerosolerzeugungsanordnung (10), umfassend:
- einen aerosolerzeugenden Artikel (12), der sich entlang einer Artikelachse (X) erstreckt und für den Betrieb mit einer Aerosolerzeugungsvorrichtung (11) konfiguriert ist;
wobei der Artikel (12) aus einem Reservoirkörper (22) besteht, der aus einem Block aus Halbleiterkeramik geformt ist, der mit mindestens einem elektrisch leitenden Mittel dotiert ist;
die Halbleiterkeramik porös und in der Lage ist, einen flüssigen, aerosolbildenden Ausgangsstoff aufzunehmen und das erzeugte Aerosol freizusetzen;
das elektrisch leitende Mittel so konfiguriert ist, dass es elektrischen Strom leitet oder erzeugt, wenn es von der Vorrichtung (11) mit Strom versorgt wird, und dass es den in dem Reservoirkörper (22) enthaltenen aerosolbildenden Ausgangsstoff erhitzt, um ein Aerosol zu erzeugen; und
- eine Aerosolerzeugungsvorrichtung (11), wobei die Vorrichtung (11) eine Heizkammer (20) umfasst, die in der Lage ist, den Artikel (12) aufzunehmen, wobei die Vorrichtung (11) ferner eine Stromversorgung (16) und ein Energieverbindungssystem (30) umfasst, das in der Heizkammer (20) angeordnet ist, wobei die Stromversorgung (16) so konfiguriert ist, dass sie das Energieverbindungssystem (30) mit Strom versorgt, um Aerosol durch den Artikel (12) zu erzeugen.

2. Aerosolerzeugungsanordnung (10) nach Anspruch 1, bei der die Halbleiterkeramik aus Siliziumkarbid (SiC) oder Molybdändisilizid (MoSi2) ausgewählt ist.

3. Aerosolerzeugungsanordnung (10) nach Anspruch 1 oder 2, bei der das elektrisch leitenden Mittel ein Dotiermittel ist, das aus Yttriumoxid (Y2O3), Scandiumoxid (Sc2O3), Silizium (Si), Ti2CN und Kombinationen davon ausgewählt ist.

4. Aerosolerzeugungsanordnung (10) nach Anspruch 3, bei der das Verhältnis zwischen dem elektrisch leitenden Mittel und der Keramik in dem Reservoirkörper (22) zwischen 5 % und 15 % (Gew./Gew.) beträgt.

5. Aerosolerzeugungsanordnung (10) nach einem der vorhergehenden Ansprüche, bei der der Reservoirkörper (22) mindestens einen Luftdurchströmkanal (26) bildet.

6. Aerosolerzeugungsanordnung (10) nach einem der Ansprüche 1 bis 5, bei der der Reservoirkörper (22) quaderförmig oder sechseckig ist.

7. Aerosolerzeugungsanordnung (10) nach einem der Ansprüche 1 bis 5, bei der der Reservoirkörper (22) zylindrisch ist.

8. Aerosolerzeugungsanordnung (10) nach einem der Ansprüche 1 bis 7, wobei das Energieverbindungssystem (30) aus zwei Elektroden besteht, die in der Heizkammer (20) so angeordnet sind, dass sie den Reservoirkörper (22) auf zwei gegenüberliegenden Seiten des Reservoirkörpers (22) berühren.

9. Aerosolerzeugungsanordnung (10) nach einem der Ansprüche 1 bis 8, wobei sich die beiden gegenüberliegenden Seiten des Reservoirkörpers (22) entlang der Artikelachse (X) oder senkrecht zur Artikelachse (X) erstrecken.

10. Aerosolerzeugungsanordnung (10) nach einem der Ansprüche 1 bis 7, wobei das Energieverbindungssystem (30) durch eine Induktionsspule gebildet wird.

11. Aerosolerzeugungsanordnung (10) nach einem der Ansprüche 1 bis 10, wobei das Energieverbindungssystem (30) so angeordnet ist, dass es den Reservoirkörper (22) auf einer gesamten Seite des Reservoirkörpers (22) berührt oder diesem gegenüberliegt.

12. Aerosolerzeugungsanordnung (10) nach einem der Ansprüche 1 bis 11, wobei der Artikel (12) dem Anspruch 6 entspricht, wobei die Vorrichtung (10) ein Mundstück (13) umfasst, wobei der Luftdurchströmkanal (26) in der Lage ist, das erzeugte Aerosol, das von der Halbleiterkeramik freigesetzt wird, zum Mundstück (13) zu leiten.

13. Aerosolerzeugungsanordnung (10) nach Anspruch 12, wobei der Reservoirkörper (22) mit der Heizkammer (20) einen Spalt (40) definiert, der einen sekundären Luftstromweg bildet, wobei der sekundäre Luftstromweg in der Lage ist, das erzeugte Aerosol, das von der Halbleiterkeramik freigesetzt wird, zum Mundstück (13) zu leiten.

## Revendications

1. Ensemble de génération d'aérosol (10) comprenant :
- un article de génération d'aérosol (12) s'étendant le long d'un axe d'article (X) et configuré pour fonctionner avec un dispositif de génération d'aérosol (11) ;
l'article (12) consiste en un corps de réservoir (22) formé d'un bloc de céramique semi-conductrice dopée avec au moins un agent conducteur d'électricité ;
la céramique semi-conductrice est poreuse et capable de retenir un précurseur liquide de formation d'aérosol et de libérer l'aérosol produit ;
l'agent conducteur d'électricité est configuré pour conduire ou générer un courant électrique lorsqu'il est alimenté par le dispositif (11) et pour chauffer le précurseur de formation d'aérosol contenu dans le corps du réservoir (22) afin de produire un aérosol ; et
- un dispositif de génération d'aérosol (11), le dispositif (11) comprenant une chambre de chauffe (20) capable de recevoir l'article (12), le dispositif (11) comprenant en outre une alimentation électrique (16) et un système de connexion énergétique (30) disposé dans la chambre de chauffe (20), l'alimentation électrique (16) étant configurée pour alimenter le système de connexion énergétique (30) afin de produire un aérosol à partir de l'article (12).

2. Ensemble de génération d'aérosol (10) selon la revendication 1, dans lequel la céramique semi-conductrice est choisie parmi le carbure de silicium (SiC) ou le disiliciure de molybdène (MoSi2).

3. Ensemble de génération d'aérosol (10) selon la revendication 1 ou 2, dans lequel l'agent conducteur d'électricité est un agent dopant choisi parmi l'oxyde d'yttrium (Y2O3), l'oxyde de scandium (Sc2O3), le silicium (Si), le Ti2CN et des combinaisons de ceux-ci.

4. Ensemble de génération d'aérosol (10) selon la revendication 3, dans lequel le rapport entre l'agent conducteur d'électricité et la céramique dans le corps du réservoir (22) est compris entre 5 % et 15 % en poids.

5. Ensemble de génération d'aérosol (10) selon l'une quelconque des revendications précédentes, dans lequel le corps du réservoir (22) forme au moins un canal de passage d'air (26).

6. Ensemble de génération d'aérosol (10) selon l'une quelconque des revendications 1 à 5, dans lequel le corps du réservoir (22) est de forme cuboïde ou hexagonale.

7. Ensemble de génération d'aérosol (10) selon l'une quelconque des revendications 1 à 5, dans lequel le corps du réservoir (22) est cylindrique.

8. Ensemble de génération d'aérosol (10) selon l'une quelconque des revendications 1 à 7, dans lequel le système de connexion énergétique (30) est formé par deux électrodes disposées dans la chambre de chauffe (20) de manière à être en contact avec le corps de réservoir (22) sur deux côtés opposés du corps de réservoir (22).

9. Ensemble de génération d'aérosol (10) selon l'une quelconque des revendications 1 à 8, dans lequel les deux côtés opposés du corps du réservoir (22) s'étendent le long de l'axe de l'article (X) ou perpendiculairement à l'axe de l'article (X).

10. Ensemble de génération d'aérosol (10) selon l'une quelconque des revendications 1 à 7, dans lequel le système de connexion énergétique (30) est formé par une bobine d'induction.

11. Ensemble de génération d'aérosol (10) selon l'une quelconque des revendications 1 à 10, dans lequel le système de connexion énergétique (30) est disposé de manière à entrer en contact ou à faire face au corps du réservoir (22) sur un côté entier du corps du réservoir (22).

12. Ensemble de génération d'aérosol (10) selon l'une quelconque des revendications 1 à 11, dans lequel l'article (12) est conforme à la revendication 6, l'ensemble (10) comprenant un embout buccal (13), le canal de passage d'air (26) étant capable de guider l'aérosol généré libéré par la céramique semi-conductrice vers l'embout buccal (13).

13. Ensemble de génération d'aérosol (10) selon la revendication 12, dans lequel le corps du réservoir (22) définit avec la chambre de chauffe (20) un espace (40) formant une voie d'écoulement d'air secondaire, la voie d'écoulement d'air secondaire pouvant guider l'aérosol généré libéré par la céramique semi-conductrice vers l'embout buccal (13).
